# FASCICULE DE BREVET EUROPEEN

(11) **EP 0 463 899 B1**
(45) Date de publication et mention de la délivrance du brevet: **15.12.1993**
(21) Numéro de dépôt: 91401418.8
(22) Date de dépôt: 30.05.1991
(51) Int. Cl.: F16D 23/06, F16D 23/04

(54) **Synchroniseur**
Synchroeinrichtung
Synchroniser

(30) Priorité: 25.06.1990 FR 9007944
(43) Date de publication de la demande: 02.01.1992
(73) Titulaire: AUTOMOBILES PEUGEOT, 75116 Paris (FR); AUTOMOBILES CITROEN, 92200 Neuilly-sur-Seine (FR)
(72) Inventeur: Chretien, Philippe, F-78430 Louveciennes (FR)
(74) Mandataire: Moncheny, Michel

(56) Documents cités:
- EP-A- 0 376 816
- DE-A- 2 331 053
- DE-B- 1 042 978
- DE-B- 1 133 188
- DE-C- 926 468

## Description

La présente invention concerne un synchroniseur pour au moins un pignon monté libre en rotation sur un arbre.

L'invention concerne plus particulièrement un synchroniseur du type décrit et représenté dans le document FR-A-2.571.803 qui comporte un moyeu fixé à l'arbre, un manchon de commande monté coulissant axialement sur le moyeu pour occuper plusieurs positions axiales définies par au moins un poussoir radial à bille dont la bille est sollicitée élastiquement vers l'extérieur pour coopérer avec une piste axiale intérieure crantée du manchon, une bague intermédiaire de friction liée en rotation au manchon, déplaçable axialement entre le moyeu et le pignon et comportant une portée conique de friction qui coopère avec une portée complémentaire du pignon lorsqu'elle est poussée axialement vers ce dernier par des moyens d'entraînement comportant une rampe d'armement formée dans la piste et une pièce de liaison qui assure la transmission à la bague de friction de l'effort de poussée exercé par le manchon sur la bille, et des dentures de crabotage formées respectivement sur le pignon et au voisinage de l'extrémité axiale correspondante du manchon et qui coopèrent pour accoupler le pignon au manchon lorsque ce dernier occupe sa position axiale extrême d'engagement.

Dans ce synchroniseur double, chaque bille entraîne alternativement les deux bagues par l'intermédiaire d'une plaque qui génère un jeu axial qui s'ajoute à celui de la bille dans l'orifice de la plaque qui la reçoit. La somme de ces jeux crée un surcroît de course du manchon et donc du levier de commande d'un changement de vitesse.

L'invention a pour but de proposer un synchroniseur du type mentionné précédemment dans lequel l'ensemble des positions axiales du manchon soit déterminé avec précision et sans jeu axial.

Dans ce but l'invention propose un synchroniseur caractérisé en ce que le poussoir comporte une butée solidaire du poussoir qui peut s'opposer à tout déplacement axial de la bille du côté opposé au pignon, la bille coopérant d'autre part avec ladite piste axiale qui comporte une portion rectiligne qui s'étend parallèlement à l'axe du manchon en direction du pignon et qui est délimitée axialement dans la direction opposée au pignon par un cran d'armement comprenant une rampe d'armement inclinée en direction de l'axe et une rampe inverse d'engagement qui coopère avec la bille pour immobiliser axialement le manchon dans la position d'engagement correspondant au crabotage du pignon, et en ce que la pièce de liaison est une patte axiale solidaire de la bague de friction dont l'extrémité libre coopère avec la bille.

Selon d'autres caractéristiques de l'invention :
- en position d'engagement, le manchon est maintenu en appui axial contre une partie en regard du pignon grâce à la coopération de la bille qui est en appui élastique contre la rampe d'engagement et contre la butée solidaire du poussoir ;
- le poussoir radial comporte un piston dont la face supérieure libre coopère avec la bille, ladite butée étant une patte radiale dont une face est agencée en vis-à-vis de la bille et qui s'étend sensiblement depuis la face supérieure du piston ;
- le manchon est maintenu en position de point mort du fait de la coopération de la bille avec la rampe d'armement et avec une portion de la face supérieure libre du poussoir inclinée par rapport à l'axe du synchroniseur de manière à s'opposer au déplacement de la bille dans la direction correspondant à son éloignement de la butée, et du fait de la coopération d'une patte du moyeu qui fait saillie radialement vers l'extérieur avec une face de butée de point mort correspondante qui fait saillie radialement vers l'intérieur dans une rainure axiale du manchon.

L'invention propose également un synchroniseur double pour deux pignons montés libres en rotation sur un arbre de part et d'autre d'un moyeu, caractérisé en ce que chacun des deux synchroniseurs est conforme aux enseignements de l'invention et en ce que les poussoirs radiaux à billes comprennent deux séries de poussoirs répartis alternativement et régulièrement autour de l'axe du moyeu, chacune des deux séries étant associée au synchroniseur de l'un des deux pignons, chaque bille d'une série coopérant d'une part avec une butée solidaire de son poussoir et d'autre part avec une des pistes axiales associées dont les portions rectilignes s'étendent depuis le plan médian du manchon ;
- la face supérieure libre de chacun des poussoirs comporte une portion inclinée par rapport à l'axe du synchroniseur de manière à s'opposer au déplacement de la bille dans la direction correspondant à son éloignement de la butée.

Grâce aux caractéristiques de l'invention, chacune des pièces est positionnée axialement de manière très précise lors des différentes phases d'actionnement du manchon d'entraînement en vue du passage d'une vitesse et les moyens de verrouillage en position, réalisés sous la forme de poussoirs à bille, permettent d'assurer un maintien précis en position axiale engagée.

Dans le cas du synchroniseur double, le dégagement de chacun des rapports peut être effectué sans provoquer aucun phénomène de léchage résiduel sur le synchroniseur du rapport opposé et on supprime ainsi les effets nuisibles du léchage résiduel qui génèrent un couple ayant pour effet de plaquer le manchon contre les rampes classiques, dites "anti-lâcher" des cannelures de crabotage qui pénalisent l'effort de dégagement de façon analogue à un débrayage incomplet.

D'autres caractéristiques et avantages de l'invention apparaîtront à la lecture détaillée qui va suivre pour la compréhension de laquelle on se reportera aux dessins annexés dans lesquels :
- La figure 1 est une vue en coupe axiale d'un synchroniseur simple réalisé conformément aux enseignements de l'invention, qui est représenté en position de point mort et dont la position d'engagement de rapport est représentée en traits mixtes ;
- la figure 2 est une vue de détail illustrant une portion du moyeu et un poussoir radial à bille selon la flèche F2 de la figure 1 ;
- la figure 3 est une vue selon la flèche F3 de la figure 2 ;
- la figure 4 est une vue en coupe axiale d'une portion du synchroniseur de la figure 1 selon un plan de coupe décalé angulairement par rapport au plan de coupe de la figure 1 et qui représente les moyens de butée de point mort du synchroniseur ;
- la figure 5 est une vue en coupe axiale d'un synchroniseur double réalisé conformément aux enseignements de l'invention et qui est représenté en position de point mort ;
- la figure 6 est une vue simplifiée en section selon la ligne 6-6 de la figure 5 ;
- les figures 7a, 7b et 7c sont des vues de détail en section selon la ligne 7-7 de la figure 6 qui correspondent respectivement aux positions de point mort, d'armement et d'engagement du synchroniseur avec l'un des deux pignons ;
- les figures 8a, 8b et 8c sont des vues similaires à celles des figures 7a, 7b et 7c prises en section selon la ligne 8-8 de la figure 6 ;
- la figure 9 est une vue partielle en perspective du moyeu du synchroniseur double de la figure 5 ; et
- la figure 10 est une vue simplifiée en section axiale d'un manchon de synchroniseur selon l'invention.

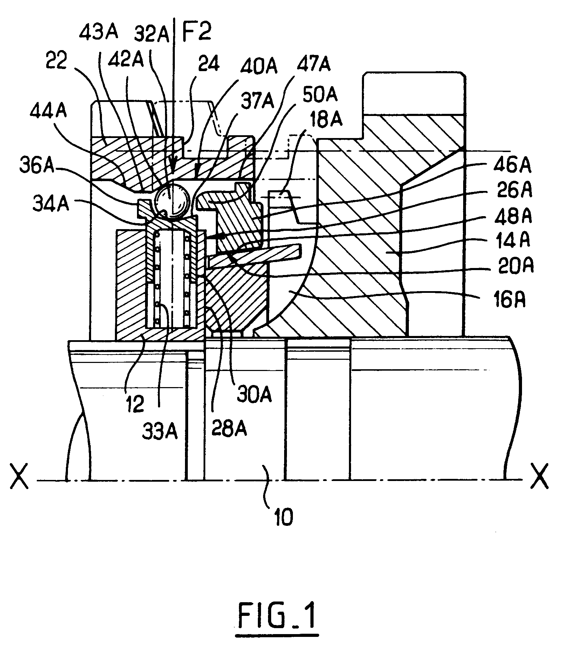

On a représenté à la figure 1 un arbre 10 sur lequel est fixé axialement et immobilisé en rotation un moyeu 12. A droite du moyeu 12, en considérant la figure, est disposé un pignon 14A qui est immobilisé axialement mais libre en rotation sur l'arbre 10.

Le pignon 14A est muni d'un prolongement axial 16A sur la périphérie duquel sont formées des dentures de crabotage 18A.

Le pignon 14A comporte une surface de friction conique 20A orientée vers l'extérieur par rapport à l'axe de rotation X-X de l'arbre 10. Cette surface 20A est formée, de façon connue, soit directement sur le pignon, soit, comme représenté, sur une douille tronconique solidaire du pignon 14A.

Le synchroniseur comporte également un manchon de commande 22 qui est susceptible d'être déplacé axialement par rapport au moyeu 12 sous l'action d'une fourchette de commande (non représentée) qui est reçue dans une rainure de fourchette 24 formée dans la surface cylindrique externe du manchon 22.

Les différentes positions axiales du manchon 22 par rapport au moyeu 12 résultent de la coopération de moyens de verrouillage, constitués par une série de poussoirs à bille 26A, avec le manchon 22. Les poussoirs radiaux sont répartis régulièrement autour de l'axe X-X du moyeu 12.

Le poussoir 26A est constitué d'un alésage 28A qui s'étend radialement dans le moyeu 12 et dans lequel est reçu un piston de poussoir 30A qui sollicite radialement vers l'extérieur une bille de verrouillage 32A sous l'action d'un ressort hélicoïdal de poussoir 33A.

La bille 32A repose sur la face supérieure libre 34A du piston 30A.

La face supérieure 34A comporte une patte de butée 36A qui s'étend radialement vers l'extérieur en vis-à-vis de la bille 32A afin de limiter les déplacements axiaux de cette dernière par rapport au moyeu 12 dans la direction correspondant à l'éloignement du piston 14A.

Chacune des billes 32A est reçue dans une piste axiale interne 40A formée dans la surface cylindrique interne du manchon 22.

La piste 40A comprend un cran d'armement constitué par une rampe d'armement 42A inclinée par rapport a l'axe X-X du manchon 22 et qui se prolonge, vers la gauche en considérant la figure 1, par un méplat 43A et par une rampe d'engagement 44A. La rampe d'engagement 44A est inclinée par rapport à l'axe du moyeu selon la direction inverse de celle de la rampe d'armement 42A.

La piste 40A comprend également une portion rectiligne 47A parallèle à l'axe X-X qui s'étend depuis la rampe d'armement 42A axialement vers la droite en considérant la figure 1, en direction du pignon 14A, c'est-à-dire dans la direction opposée au cran d'armement.

Le synchroniseur comporte également une bague intermédiaire de friction 46A qui est disposée axialement entre le pignon 14A et le moyeu 12 de façon que sa surface conique interne de friction 48A soit susceptible de coopérer avec la surface conique externe en vis-à-vis 20A.

Les moyens d'actionnement de la bague de friction 46A par poussée axiale du manchon 22 sont constitués par les billes 32A qui coopèrent avec des pattes, ou talons, axiales 50A venues de matière avec la bague de friction et dont la face libre d'extrémité est en vis-à-vis de la bille 32A et de la patte radiale de butée 36A.

La bague intermédiaire de friction 46A est liée en rotation avec le manchon 22, ce dernier étant libre de coulisser axialement par rapport à celle-ci.

Outre la patte de butée 36A, la face supérieure 34A du piston 30A comporte une portion 37A inclinée par rapport à l'axe X-X du synchroniseur de manière à s'opposer au déplacement de la bille en direction du pignon 14A, c'est-à-dire dans la direction correspondant à l'éloignement de la bille 32A de la butée 36A.

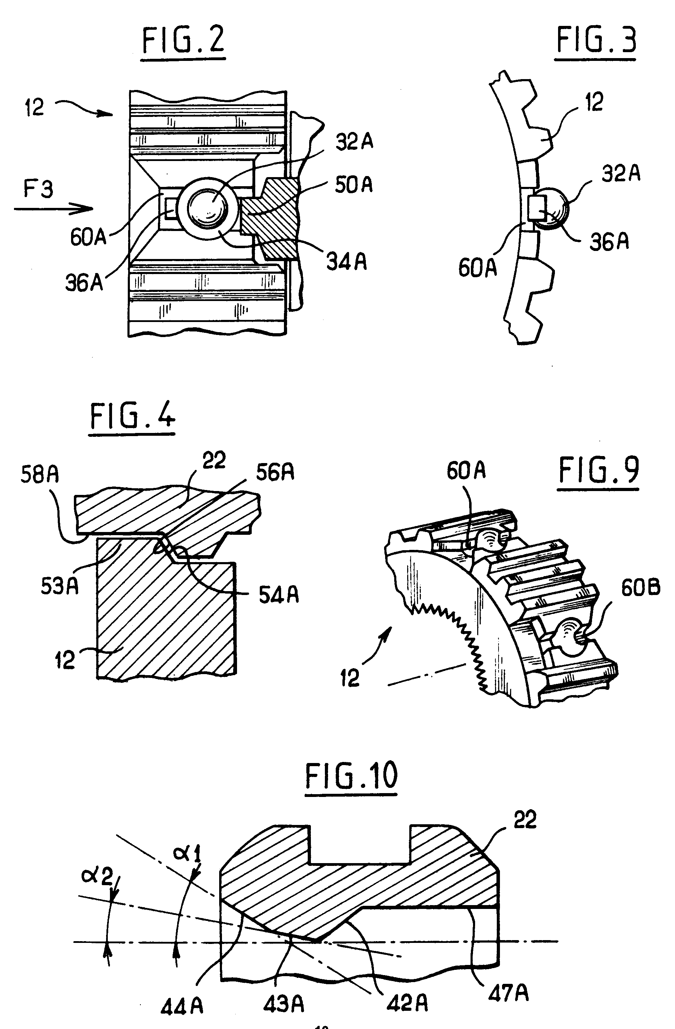

Dans un plan axial décalé angulairement par rapport au plan de la figure 1, et comme cela est représenté à la figure 4, le moyeu 12 comporte une patte 53A qui fait saillie radialement vers l'extérieur et dont une face de butée 54A tournée vers le pignon 14A est prévue pour coopérer avec une face de butée de point mort correspondante 56A agencée en vis-à-vis sur le manchon et qui fait saillie radialement vers l'intérieur dans une rainure axiale 58A du manchon.

Les faces de butée 54A et 56A sont agencées de manière à s'opposer à tout déplacement axial du manchon 22 par rapport au moyeu 12 dans la direction correspondant à son éloignement du piston 14A, c'est-à-dire vers la gauche en considérant les figures 1 et 4 dans lesquelles le synchroniseur est représenté dans sa position de point mort.

Afin de permettre les déplacements radiaux du piston 30A tout en maintenant sa patte de butée 36A convenablement orientée, celle-ci est engagée dans une gorge 60A du moyeu 12.

Selon une variante non représentée, la gorge 60A et la patte 56A pourraient être décalées par rapport à l'axe du synchroniseur afin de constituer des moyens de détrompage lors de l'assemblage du synchroniseur.

La gorge 60A se prolonge également axialement en 60B dans la direction opposée, c'est-à-dire en direction du piston 14A et il est ainsi possible de prolonger la portion inclinée 37A afin de tolérer une usure plus importante des surfaces coniques, cette usure nécessitant que la bille 32A puisse se déplacer axialement de manière plus importante pour venir pousser la bague de friction 46A.

Dans la position de point mort représentée aux figures 1 à 4, le manchon 22 est maintenu dans sa position axiale du fait de la coopération de la bille 32A avec la rampe d'armement 42A et avec la portion inclinée 37A de la face supérieure 34A du poussoir et du fait de la coopération des faces de butée 54A et 56A du moyeu 12 et du manchon 22.

Si à l'aide de la fourchette de commande on exerce un effort axial de poussée, vers la droite en considérant la figure 1, sur le manchon 22, les rampes d'armement 42A poussent les billes 32A axialement vers la droite jusqu'à ce qu'elles viennent en contact avec les pattes axiales de liaison 50A de la bague intermédiaire de friction 46A. Cette mise en contact a pour effet d'amener également en contact les surfaces de friction 20A et 48A et donc de provoquer l'entraînement en rotation du pignon 14A.

Lorsque la vitesse de synchronisation est atteinte la poursuite de l'effort de poussée axiale sur le manchon 22 a pour effet de provoquer l'effacement vers l'intérieur des billes 32A, à l'encontre des efforts exercés par les ressorts 33A, pour permettre le crabotage du pignon 14A et son entraînement en rotation par l'arbre 10.

On atteint ainsi la position axiale extrême vers la droite du manchon 22 dans laquelle les billes 32A sont en appui élastique contre les rampes d'engagement 44A des pistes 40A, ce qui maintient le manchon en appui axial direct contre le pignon.

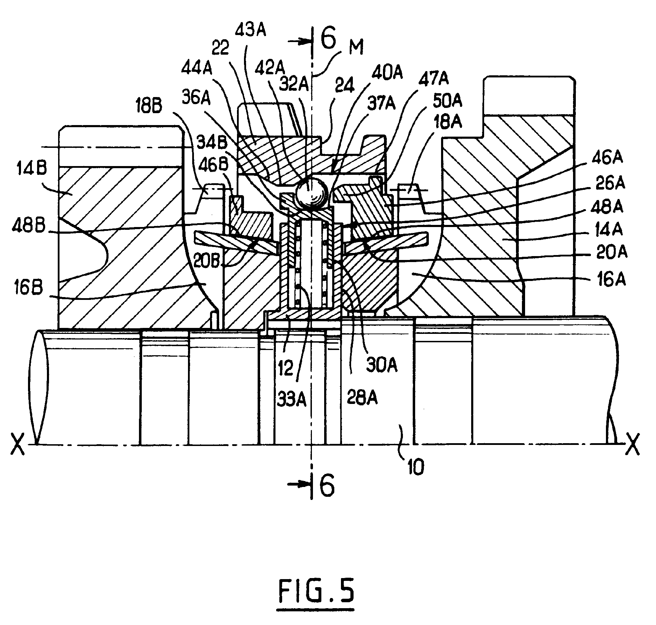

La conception du synchroniseur qui vient d'être décrite en référence aux figures 1 à 4 trouve également à s'appliquer dans le cas d'un synchroniseur double tel que celui représenté aux figures 5 à 9.

La conception du synchroniseur double étant globalement symétrique par rapport à son plan médian M, l'ensemble des composants relatifs au premier synchroniseur, à droite en considérant la figure 5, seront repérés par des chiffres de référence indicés A (comme dans le cas de la figure 1), tandis que les composants de l'autre synchroniseur sont repérés avec les mêmes chiffres de référence indicés avec la lettre B.

Les différentes positions axiales du manchon 22 par rapport au moyeu 12 résultent de la coopération de moyens de verrouillage constitués par deux séries de poussoirs à bille 26A et 26B avec la manchon 22.

Chacune des séries de poussoirs à bille 26A et 26B comprend trois poussoirs radiaux qui sont répartis et alternés régulièrement autour de l'axe X-X du moyeu 12.

Du fait de la conception symétrique du synchroniseur double, et comme cela sera expliqué par la suite, le moyeu 12 et le manchon 22 ne comportent pas de surfaces de butée de point mort du type des surfaces 54A et 56A décrites et représentées dans le cas du synchroniseur simple représenté aux figures 1 et 4.

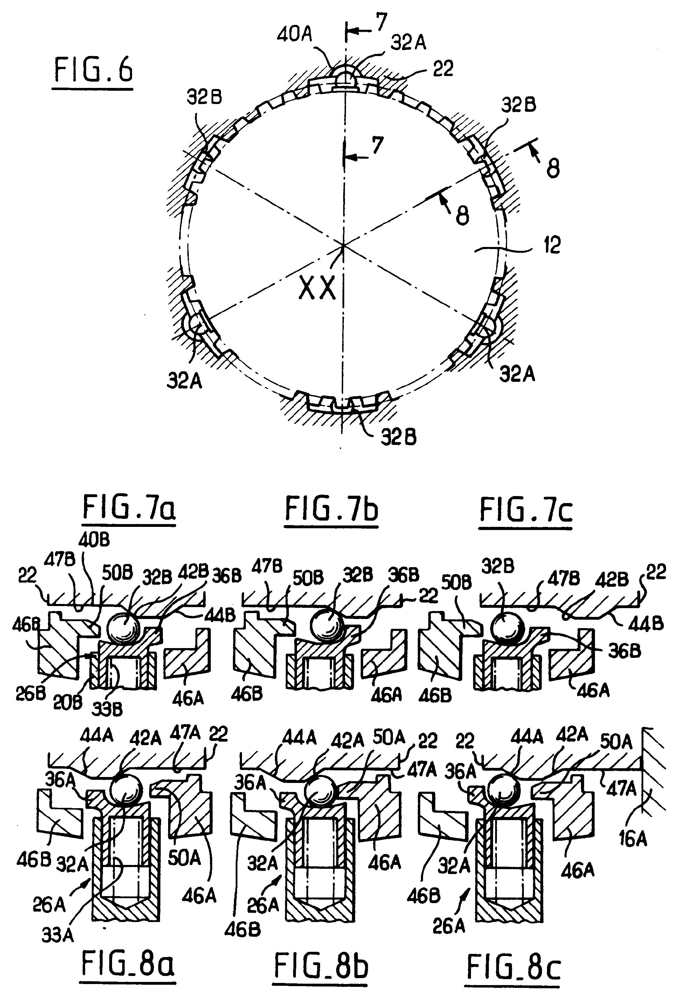

On décrira maintenant le mode de fonctionnement du synchroniseur double en se reportant notamment aux séries de figures 7 et 8.

Lorsque le synchroniseur double est dans sa position de point mort illustrée aux figures 5, 7a et 8a, les billes 32A et 32B de chacune des séries de poussoirs radiaux 26A et 26B sont respectivement en appui contre les rampes d'armement 42A et 42B formées dans les pistes 40A et 40B.

Sous l'action des ressorts de poussoirs 33A et 33B, les deux séries de billes 32A et 32B assurent ainsi en coopération et sans jeu axial le maintien du manchon 22 en position médiane de point mort du fait du choix des angles des portions de surfaces inclinées 37A, 37B et des rampes d'armement 42A et 42B.

La commande de la synchronisation et de l'engagement avec le pignon 14A s'effectuent de la même manière que dans le cas d'un synchroniseur simple.

Dans le cas du synchroniseur double, on constate que lors de l'ensemble des mouvements de déplacement axiaux vers la droite du manchon 22, les billes 32B de l'autre série des poussoirs axiaux 26B n'ont pas été entraînées axialement vers la droite du fait de l'existence des pattes radiales de butée 36B et des portions planes rectilignes 47B des pistes axiales 40B.

L'ensemble des opérations qui viennent d'être décrites s'appliquent symétriquement en vue de permettre la synchronisation et l'engagement avec le pignon opposé 14B.

On comprend également aisément que le retour du manchon 22 vers sa position médiane de point mort s'effectue, après le passage d'un point dur dû à la coopération des billes 32A avec les rampes 44A, sans provoquer aucune action néfaste sur le synchroniseur opposé grâce à l'arrêt axial des billes 32A contre leurs butées 36A et grâce à l'écartement existant entre les billes 32B et leurs rampes d'armement 42B.

On a représenté à la figure 10 une variante de réalisation de la rampe d'engagement 44A du manchon 22.

La rampe d'engagement 44A forme ici un premier angle α1 par rapport à l'axe X-X du manchon 22 tandis que le méplat 43A, qui relie entre elles la rampe d'engagement 44A et la rampe d'armement 44A, est également incliné par rapport à l'axe X-X pour former un second angle α2.

La surface 43A est inclinée dans le même sens que la rampe d'engagement 44A de manière à constituer une "contre-rampe" de fin d'armement qui réduit les efforts maximaux de crabotage liés à un collage résiduel de la bague.

## Revendications

1. Synchroniseur pour un pignon (14A) monté libre en rotation sur un arbre (10), du type comportant un moyeu (12) fixé à l'arbre (10), un manchon de commande (22) monté coulissant axialement sur le moyeu (12) pour occuper plusieurs positions axiales définies par au moins un poussoir radial à bille (26A) dont la bille (32A) est sollicitée élastiquement vers l'extérieur pour coopérer avec une piste axiale intérieure crantée (40A) du manchon (22), une bague intermédiaire de friction (46A) liée en rotation au manchon (22), déplaçable axialement entre le moyeu (12) et le pignon (14A) et comportant une portée conique de friction (48A) qui coopère avec une portée complémentaire (20A) du pignon (14A) lorsqu'elle est poussée axialement vers ce dernier par des moyens d'entraînement comportant une rampe d'armement (42A) formée dans ladite piste (40A) et une pièce de liaison qui assure la transmission à la bague de friction (46A) de l'effort de poussée exercé par le manchon (22) sur la bille (32A), et des dentures de crabotage (18A) formées respectivement sur le pignon et au voisinage de l'extrémité axiale correspondante du manchon et qui coopèrent pour accoupler le pignon (14A) au manchon (22) lorsque ce dernier occupe sa position axiale extrême d'engagement, caractérisé en ce que le poussoir (26A) comporte une butée (36A) qui peut s'opposer à tout déplacement axial de la bille (32A) du côté opposé au pignon (14A), en ce que ladite piste axiale (40A) comporte une portion rectiligne (47A) qui s'étend parallèlement à l'axe du manchon en direction du pignon (14A) et qui est délimitée axialement dans la direction opposée au pignon par un cran d'armement comprenant une rampe d'armement (42A) inclinée en direction de l'axe et une rampe inverse d'engagement (44A) qui coopère avec la bille pour immobiliser axialement le manchon dans la position d'engagement correspondant au crabotage du pignon (14A), et en ce que la pièce de liaison est une patte axiale (50A) solidaire de la bague de friction (46A) dont l'extrémité libre coopère avec la bille (32A).

2. Synchroniseur selon la revendication 1, caractérisé en ce que, en position d'engagement, le manchon (22) est maintenu en appui axial contre une partie en regard du pignon (14A) grâce à la coopération de la bille (32A) qui est en appui élastique contre la rampe d'engagement (42A) et contre la butée (36A) solidaire du poussoir (26A).

3. Synchroniseur selon l'une des revendications 1 ou 2, caractérisé en ce que le poussoir radial comporte un piston (30A) dont la face supérieure libre (34A) coopère avec la bille (32A) et en ce que ladite butée (36A) est une patte radiale dont une face est agencée en vis-à-vis de la bille et qui s'étend sensiblement depuis la face supérieure (34A) du piston (30A) et est engagée dans une gorge (60A) du moyeu (12).

4. Synchroniseur selon la revendication 3, caractérisé en ce que, en position de point mort, le manchon (22) est maintenu en position du fait de la coopération de la bille (32A) avec la rampe d'armement (42A) et avec une portion (37A) de la face supérieure libre (34A) du poussoir (26A) inclinée par rapport à l'axe (X-X) du synchroniseur de manière à s'opposer au déplacement de la bille (32A) dans la direction correspondant à son éloignement de ladite butée (36A), et du fait de la coopération d'une patte (53A) du moyeu (12) qui fait saillie radialement vers l'extérieur avec une face de butée de point mort correspondante (56A) qui fait saillie radialement vers l'intérieur dans une rainure axiale (58A) du manchon (22).

5. Synchroniseur double pour deux pignons 14A, 14B montés libres en rotation sur un arbre (10) de part et d'autre d'un moyeu (12), caractérisé en ce que chacun des deux synchroniseurs est conforme à l'une quelconque des revendications 1 à 3 et en ce que les poussoirs radiaux à bille comprennent deux séries (26A, 26B) de poussoirs réparties alternativement et régulièrement autour de l'axe (X-X) du moyeu (12), chacune des deux séries étant associée au synchroniseur de l'un des deux pignons (14A, 14B), chaque bille (32A, 32B) d'une série coopérant d'une part avec une butée (36A, 36B) solidaire de son poussoir (26A, 26B) et d'autre part avec une des pistes axiales associées (40A, 40B) dont les portions rectilignes (47A, 47B) s'étendent depuis le plan médian (M) du manchon (22).

6. Synchroniseur selon la revendication 5, caractérisé en ce que la face supérieure libre (34A) de chacun des poussoirs (26A) comporte une portion inclinée (37A, 37B) par rapport à l'axe du synchroniseur (X-X) de manière à s'opposer au déplacement de la bille (32A, 32B) dans la direction correspondant à son éloignement de ladite butée (36A, 36B).

7. Synchroniseur selon l'une quelconque des revendications précédentes, caractérisé en ce que la rampe d'armement (42A) et la rampe d'engagement (44A) sont reliées entre elles par un méplat (43A) qui est incliné par rapport à l'axe (X-X) dans le même sens que la rampe d'engagement (44A).

## Claims

1. Synchroniser for a gear (14A) mounted so as to rotate freely on a shaft (10), of the type having a hub (12) fixed to the shaft (10), a control collar (22) mounted so as to slide axially on the hub (12) in order to occupy several axial positions defined by at least one radial ball pusher (26A), the ball (32A) of which is pushed elastically outwards so as to cooperate with an internal notched axial track (40A) on the sleeve (22), an intermediate friction ring (46A) connected to the sleeve (22) so as to rotate with it, movable axially between the hub (12) and gear (14A) and having a conical friction face (48A) which interacts with a complementary face (20A) on the gear (14A) when it is pushed axially towards the latter by driving means comprising an activating slope (42A) formed in the said track (40A) and a connecting piece which transmits to the friction ring (46A) the thrust exerted by the sleeve (22) on the ball (32A), and coupling teeth (18A) formed respectively on the gear and in the vicinity of the corresponding axial end of the sleeve and which interact to couple the gear (14A) to the sleeve (22) when the latter occupies its extreme axial engagement position, characterised in that the pusher (26A) has a stop (36A) which is able to resist any axial movement of the ball (32A) on the side opposite to the gear (14A), in that the said axial track (40A) includes a rectilinear portion (47A) which extends parallel to the axis of the sleeve in the direction of the gear (14A) and which is defined axially in the direction opposite to the gear by an activating notch comprising an activating slope (42A) sloping in the direction of the axis and a reverse engagement slope (44A) which cooperates with the ball in order to immobilise the sleeve axially in the engagement position corresponding to the coupling of the gear (14A), and in that the connecting piece is an axial lug (50A) integral with the friction ring (46A), the free end of which cooperates with the ball (32A).

2. Synchroniser according to Claim 1, characterised in that, in the engagement position, the sleeve (22) is held in axial abutment against a facing part of the gear (14A) by virtue of the cooperation of the ball (32A) which bears elastically against the engagement slope (42A) and against the stop (36A) fixed to the pusher (26A).

3. Synchroniser according to one of Claims 1 or 2, characterised in that the radial pusher includes a piston (30A), the free upper face (34A) of which cooperates with the ball (32A), and in that the said stop (36A) is a radial lug, one face of which is arranged opposite the ball and which extends substantially from the upper face (34A) of the piston (30A) and is engaged in a recess (60A) in the hub (12).

4. Synchroniser according to Claim 3, characterised in that, in the neutral position, the sleeve (22) is held in position because of the cooperation of the ball (32A) with the activating slope (42A) and with a portion (37A) of the free upper face (34A) of the pusher (26A) sloping with respect to the axis (X-X) of the synchroniser so as to resist the movement of the ball (32A) in the direction corresponding to its separation from the said stop (36A), and because of the cooperation of a lug (53A) on the hub (12) which projects radially outwards with a corresponding neutral stop face (56A) which projects radially inwards in an axial groove (58A) in the sleeve (22).

5. Double synchroniser for two gears (14A, 14B) mounted so as rotate freely on a shaft (10) on each side of a hub (12), characterised in that each of the two synchronisers is in accordance with any one of Claims 1 to 3 and in that the radial ball pushers comprise two series (26A, 26B) of pushers distributed in alternation and at regular intervals about the axis (X-X) of the hub (12), each of the two series being associated with the synchroniser of one of the two gears (14A, 14B), each ball (32A, 32B) in a series cooperating on the one hand with a stop (36A, 36B) fixed to its pusher (26A, 26B) and on the other hand with one of the associated axial tracks (40A, 40B), the rectilinear portions (47A, 47B) of which extend from the mid-plane (M) of the sleeve (22).

6. Synchroniser according to Claim 5, characterised in that the free upper face (34A) of each of the pushers (26A) has a portion (37A, 37B) sloping with respect to the axis of the synchroniser (X-X) so as to resist the movement of the ball (32A, 32B) in the direction corresponding to its separation from the said stop (36A, 36B).

7. Synchroniser according to any one of the preceding claims, characterised in that the activating slope (42A) and the engagement slope (44A) are connected to one another by a flat (43A) which is sloping with respect to the axis (X-X) in the same direction as the engagement slope (44A).

## Patentansprüche

1. Synchroneinrichtung für ein drehbar auf einer Welle (10) montiertes Ritzel (14A), des Typs mit einer auf der Welle befestigten Nabe (12), einer Steuerhülse (22), die axial verschiebbar auf der Nabe (12) montiert ist, um mehrere axiale Positionen einzunehmen, die definiert werden durch wenigstens einen radialen Kugel-Stößel (26A), dessen Kugel (32A) elastisch nach außen vorgespannt ist, um mit einer axialen inneren Rast-Laufbahn (40A) der Hülse (22) zusammenzuwirken, einem Zwischen-Reibring (46A), der drehfest mit der Hülse (22) verbunden ist, axial zwischen der Nabe (12) und dem Ritzel (14A) beweglich ist und eine konische Reibfläche (48A) aufweist, die mit einer komplementären Fläche (20A) des Ritzels (14A) zusammenwirkt, wenn sie axial gegen die letztere angedrückt wird, durch Antriebsmittel, die eine in der Laufbahn (40A) gebildete Schaltrampe (42A) und ein Verbindungsstück umfassen, das die Übertragung der durch die Hülse (22) auf die Kugel (32A) ausgeübten Schubkraft auf den Reibring (46A) gewährleistet, und mit Kupplungszahnungen (18A), die jeweils an dem Ritzel und in der Nähe des entsprechenden axialen Endes der Hülse ausgebildet sind und zusammenwirken, um das Ritzel (14A) an die Hülse (22) zu kuppeln, wenn die letztere sich in ihrer axialen Eingriffs-Endstellung befindet, dadurch **gekennzeichnet,** daß der Stößel (26A) einen Anschlag (36A) aufweist, der jegliche axiale Bewegung der Kugel (32A) zu der dem Ritzel (14A) entgegengesetzten Seite sperren kann, daß die genannte axiale Laufbahn (40A) einen geraden Abschnitt (47A) aufweist, der sich parallel zur Achse der Hülse in Richtung auf das Ritzel (14A) erstreckt und axial in der dem Ritzel entgegengesetzten Richtung durch eine Schaltrast begrenzt wird, die eine in Richtung der Achse geneigte Schaltrampe (42A) und eine umgekehrte Eingriffsrampe (44A) aufweist, die mit der Kugel zusammenwirkt, um die Hülse axial in der Eingriffsstellung zu verriegeln, die dem Klaueneingriff des Ritzels (14A) entspricht, und daß das Verbindungsstück ein an dem Reibring (46A) ausgebildeter axialer Ansatz (50A) ist, dessen freies Ende mit der Kugel (32A) zusammenwirkt.

2. Synchroneinrichtung nach Anspruch 1, dadurch **gekennzeichnet,** daß die Hülse (22) in der Eingriffsstellung durch das Zusammenwirken der Kugel (32A), die elastisch gegen die Eingriffsrampe (42A) und gegen den Anschlag (36A) am Stößel (26A) andrückt, axial in Anlage an einem gegenüberliegenden Teil des Ritzels (14A) gehalten wird.

3. Synchroneinrichtung nach Anspruch 1 oder 2, dadurch **gekennzeichnet,** daß der radiale Stößel einen Kolben (30A) aufweist, dessen freie obere Fläche (34A) mit der Kugel (32A) zusammenwirkt, und daß der genannte Anschlag (36A) ein radialer Ansatz ist, dessen eine Fläche gegenüberliegend zu der Kugel angeordnet ist und der im wesentlichen von der oberen Oberfläche (34A) des Kolbens (30A) ausgeht und in eine Nut (60A) der Nabe (12) eingreift.

4. Synchroneinrichtung nach Anspruch 3, dadurch **gekennzeichnet,** daß in der Leerlaufstellung die Hülse (22) dadurch in Position gehalten wird, daß die Kugel (32A) mit der Schaltrampe (42A) und mit einem Teil (37A) der oberen Oberfläche (34A) des Stößels (26A) zusammenwirkt, der in bezug auf die Achse (X-X) der Synchroneinrichtung derart geneigt ist, daß er einer Bewegung der Kugel (32A) in der Richtung von dem Anschlag (36A) weg entgegenwirkt. und dadurch, daß ein Ansatz (53A) der Nabe (12), der radial nach außen vorspringt, mit einer entsprechenden Leerlauf-Anschlagfläche (56A) zusammenwirkt, die in einer axialen Nut (58A) der Hülse (22) radial nach innen vorspringt.

5. Zweifach-Synchroneinrichtung für zwei Ritzel (14A, 14B), die beiderseits einer Nabe (12) drehbar auf einer Welle (10) montiert sind, dadurch **gekenn****zeichnet**, daß jede der beiden Synchroneinrichtungen gemäß einem der Ansprüche 1 bis 3 ausgebildet ist und daß die radialen Kugel-Stößel zwei Serien von abwechselnd und regelmäßig um die Achse (X-X) der Nabe (12) verteilten Stößeln (26A, 26B) aufweisen, wobei jede der beiden Serien der Synchroneinrichtung für eines der beiden Ritzel (14A, 14B) zugeordnet ist und jede Kugel (32A, 32B) einer Serie einerseits mit einem Anschlag (36A, 36B) an ihrem Stößel (26A, 26B) und andererseits mit einer der zugehörigen axialen Laufbahnen (40A, 40B) zusammenwirkt, deren gerade Abschnitte (47A, 47B) sich von der Mittelebene (M) der Hülse (22) aus erstrecken.

6. Synchroneinrichtung nach Anspruch 5, dadurch **gekennzeichnet,** daß die freie obere Oberfläche (34A) jedes Stößels (26A) einen Abschnitt (37A,37B) aufweist, der in bezug auf die Achse (X-X) der Synchroneinrichtung derart geneigt ist, daß er einer Bewegung der Kugel (32A, 32B) in der Richtung von dem Anschlag (36A, 36B) weg entgegenwirkt.

7. Synchroneinrichtung nach einem der vorstehenden Ansprüche, dadurch **gekennzeichnet,** daß die Schaltrampe (42A) und die Eingriffsrampe (44A) durch eine Abflachung (43A) verbunden sind, die in bezug auf die Achse (X-X) im gleichen Sinne geneigt ist wie die Eingriffsrampe (44A).
